**Europäisches Patentamt**

**European Patent Office**

**Office européen des brevets**

(11) Publication number: **0 061 201**
**A1**

## (12) EUROPEAN PATENT APPLICATION

(21) Application number: **82102467.6**

(22) Date of filing: **24.03.82**

(51) Int. Cl.³: **C 08 G 18/66**
**C 08 G 18/14, C 08 G 18/32**
**C 08 G 18/65, C 08 L 71/02**

(30) Priority: **25.03.81 US 247468**

(43) Date of publication of application:
**29.09.82 Bulletin 82/39**

(84) Designated Contracting States:
**BE DE FR GB IT LU NL SE**

(71) Applicant: **THE DOW CHEMICAL COMPANY**
**Dow Center 2030 Abbott Road Post Office Box 1967**
**Midland Michigan 48640(US)**

(72) Inventor: **Lancaster, Gerald Martin**
**303 Tarpon Avenue F**
**Freeport Texas 77541(US)**

(72) Inventor: **Booth, Llewellyn Delphin**
**117 Cardinal**
**Lake Jackson Texas 77566(US)**

(72) Inventor: **Turner, Robert Burton**
**328 Huckleberry**
**Lake Jackson Texas 77566(US)**

(74) Representative: **Weickmann, Heinrich, Dipl.-Ing. et al,**
**Patentanwälte Dipl.-Ing. H. Weickmann Dipl.-Phys.Dr. K.**
**Fincke Dipl.-Ing. F.A. Weickmann Dipl.-Chem. B. Huber**
**Dr.-Ing. H. Liska Möhlstrasse 22**
**D-8000 München 86(DE)**

(54) **A process for preparing a rigid polyurethane foam, the foam produced by the process, and a mixture of a polyol suitable for producing a rigid polyurethane foam and an aliphatic primary amine-containing compound.**

(57) This invention is directed to a process for preparing a rigid polyurethane foam by reacting a polyol or a mixture of polyols suitable for use in preparing rigid polyurethane foams with a polyisocyanate or polyisothiocyanate in the presence of at least one foaming agent and at least one catalyst. The process is characterized by incorporating into the reaction mixture at least one compound having at least one aliphatic primary amine group, the aliphatic primary amine-containing compound being present in an amount such that the theoretical percent urea calculated by the method described herein is from 1 to 30 weight percent based on the total weight of the reactive ingredients. This invention is also directed to the rigid polyurethane foam produced by the process, and to a mixture of a polyol suitable for producing a rigid polyurethane foam and an aliphatic primary amine-containing compound. The foams produced by the process show an improvement in at least one property such as thermal conductivity, dimensional stability or expansion at demold.

Croydon Printing Company Ltd.

**0061201**

A PROCESS FOR PREPARING A RIGID POLYURETHANE FOAM,
THE FOAM PRODUCED BY THE PROCESS, AND A MIXTURE OF
A POLYOL SUITABLE FOR PRODUCING A RIGID POLYURETHANE
FOAM AND AN ALIPHATIC PRIMARY AMINE-CONTAINING COMPOUND

The present invention is directed to an improvement in rigid foams.

Rigid polyurethane foams are well known in the art as described in POLYURETHANES: CHEMISTRY AND TECHNOLOGY PART II TECHNOLOGY, by Saunders and Frisch, Interscience Publishers, 1964, Chapter VII, Rigid Foams, pp 193-298. Such foams have utility as insulation for tanks, pipes and the like as well as refrigerator and freezer cabinets and the like.

In such applications, the thermal conductivity dimensional stability and/or expansion at demold are significant properties. The present invention provides a method for improving one or more of these properties.

The present invention is directed to a process for preparing a rigid polyurethane foam by reacting a polyol or a mixture of polyols suitable for use in preparing rigid polyurethane foams with a polyisocyanate or polyisothiocyanate in the presence of at least one foaming agent and at least one catalyst characterized by incorporating into the reaction mixture at least one compound having at least one aliphatic primary amine group, the aliphatic primary amine-containing compound being present in an amount such that the theoretical percent urea as calculated by the method described herein is from 1 to 30 weight percent based on the total weight of the reactive ingredients.

The present invention is also directed to rigid polyurethane foams prepared by the above process.

The present invention is further directed to a mixture of active hydrogen-containing materials for use in the process above which comprises a polyol or a mixture of polyols having an average hydroxyl functionality of from 2 to 8, preferably from 2.5 to 6 and most preferably from 3 to 5, and an average hydroxyl equivalent weight of from 50 to 250, preferably from 69 to 180 and most preferably from 80 to 130; and at least one compound having at least one aliphatic primary amine group, the polyol(s) and aliphatic amine(s) being present in such proportions that when combined with a polyisocyanate and/or polyisothiocyanate, at least one foaming agent and at least one catalyst, the calculated theoretical urea content of the resultant foam is from 1 to 30 weight percent based on the total weight of the reactive ingredients.

Suitable compounds having a plurality of hydroxyl groups which can be employed herein include polyether polyols and polyester polyols which are well known in the art such as, for example, as disclosed in U.S. Patents 2,697,118; 2,884,459; 2,962,455; 2,990,376; 2,927,918 and 3,865,806.

Particularly suitable are the polyether polyols resulting from the reaction of an initiator compound with an alkylene oxide or substituted alkylene oxide or mixtures thereof.

Particularly suitable initiator compounds include, for example, sucrose, glycerine, pentaerythritol, sorbitol, α-methyl glucoside, trimethylolpropane, ethylenediamine, diethylenetriamine, aminoethylethanolamine, phenol-aldehyde novolac resins, aniline, toluenediamine, methylenedianiline, bis(aminobenzyl)aniline, and mixtures thereof.

Suitable alkylene oxides or substituted alkylene oxides include, for example, ethylene oxide, propylene oxide, 1,2-butylene oxide, 2,3-butylene oxide, epichlorohydrin, epibromohydrin, methylepichlorohydrin, methylepibromohydrin, styrene oxide, and mixtures thereof.

It is preferred that the polyol or mixture of polyols have an average hydroxyl functionality of from 2 to 8, preferably from 2.5 to 6 and most preferably from 3 to 5, and an active hydroxyl equivalent weight of from 50 to 250, preferably from 69 to 180 and most preferably from 80 to 130.

Polyols having equivalent weights of up to 2000 can be employed in mixture with low equivalent weight polyols provided that the resultant mixture has the aforementioned equivalent weight.

29,241A-F

Suitable polyisocyanates include, for example, 2,4-toluenediisocyanate, 2,6-toluenediisocyanate, methylenediphenyldiisocyanate, polymethylenepolyphenyl-isocyanate, and mixtures thereof. Such polyisocyanates include both the crude and distilled products, all of which are commercially available.

Suitable polyisothiocyanates include those polyisothiocyanates corresponding to the aforementioned polyisocyanates.

Also suitable are the isocyanate- and isothiocyanate-containing prepolymers (urethane modified) prepared from hydroxyl-containing compounds and the aforementioned polyisocyantes and/or polyisothiocyanates.

Also suitable are the carbodimide modified polyisocyanates which can be prepared by reacting a suitable polyisocyanate with itself or another polyisocyanate in the presence of a suitable catalyst such as triethylphosphate.

The polyisocyanates or polyisothiocyanates suitably have an equivalent weight of from 80 to 250, preferably from 100 to 160, and an average functionality of from 2 to 4, preferably from 2.3 to 3.5.

Suitable compounds having at least one aliphatic primary amine group include, for example, ethylenediamine, diethylenetriamine, triethlenetetramine, tetraethylenepentamine, aminated polyglycols, aminoethylethanolamine, and mixtures thereof.

Preferred aliphatic primary amine-containing compounds have an amine hydrogen equivalent weight of from 15 to 500. Preferred aminated polyglycols are aminated polyoxypropylene glycols having an amine hydrogen equivalent weight of from 50 to 500.

It is preferred that the aliphatic primary amine-containing compound be either a liquid or be soluble in one of the other components employed in preparing the foam such as the polyol, cell control agent, foaming agent, fire retardant agent or other such component.

The aliphatic primary amine-containing compound is suitably employed in quantities such that the weight percent of the theoretical reaction product of the amine hydrogen atoms of the aliphatic primary amine-containing compound with a stoichiometric quantity of a polyisocyanate and/or a polyisothiocyanate containing-compound is from 1 to 30, preferably from 3 to 15 weight percent based upon the combined weight of the reactive ingredients, i.e., the polyol component, polyisocyanate and/or polyisothiocyanate, the aliphatic primary-amine containing component and any other component having one or more active hydrogens reactive with the polyisocyanate and/or polyisothiocyanate. The aforementioned weight percent of the theoretical reaction product is referred to as percent urea for the sake of brevity.

The quantities of the polyisocyanate and/or polyisothiocyanate is such that the NCX (wherein X is O and/or S) to active hydrogen ratio is from 0.7:1 to 5:1, preferably from 0.8:1 to 3:1. For purposes of the calculation herein, any hydroxyl, primary amine hydrogen and secondary amine hydrogen are considered active hydrogens whether or not in actuality a reaction occurs between said group and an NCO and/or NCS group.

Suitable catalysts which can be employed to catalyze the reaction between the active hydrogen atoms of the polyol and primary aliphatic amine-containing compound include, for example, tertiary amines and organometallic compounds.

Particularly suitable catalysts include, for example, N-methylmorpholine, N-ethylmorpholine, triethylenediamine, stannous octoate, dibutyl tin dilaurate, tin mercaptide, potassium octoate, lead octoate, triethylamine, dimethylaniline, methyldiethlyamine, dimethylethylamine, potassium acetate, tris(dimethylaminomethyl)phenol, dimethylethanolamine, and mixtures thereof.

Suitable blowing agents include low boiling hydrocarbons and halogen substituted hydrocarbons. Particularly suitable blowing agents include, for example, methylene chloride, trichloromonofluoromethane, 1,2-dibromotetrafluoroethane, 1,1,2-trichlorotrifluoroethane, 1,1,1-trichloroethane, and mixtures thereof.

If desired flame retarding agents can be employed. Suitable such agents include, for example, tris(chloroethyl)phosphate, tris(2,3-dibromopropyl)-phosphate, dibromoneopentylglycol, and mixtures thereof.

The polyurethane foams can also be formed so as to contain isocyanaurate groups by employing desired excess quantities of NCO groups over that necessary to react with the active hydrogen atoms by employing an isocyanurate-forming catalyst. Suitable such catalysts include, for example, quaternary ammonium hydroxide, alkali metal hydroxide, alkali metal salts of carboxylic acids, tertiary amines, zwitterions, and mixtures thereof. Suitable alkali metal carboxylic acid salts include, for example, sodium acetate, potassium acetate, potassium octoate, and sodium benzoate. Such alkali metal salts of carboyxlic acids are more fully described in U.S.P. 4,126,741. Suitable tertiary amines include, for example, N,N'-diethylpiperazine, trimethylamine, triethylenediamine, tributylamine, 2,4,6-tris(dimethyl-3-aminopropyl-5-hexahydro)triazine, and mixtures thereof. Suitable zwitterions are disclosed in U.S.P. 4,111,914 by Kresta and Shen.

The rigid polyurethane foam produced by the process of this invention shows an improvement in one or more properties such as thermal conductivity, dimensional stability, or expansion at demold when compared to rigid polyurethane foam prepared from a reaction mixture not containing an aliphatic primary amine-containing compound.

The following examples are illustrative of the present invention but are not to be construed as to limiting the scope thereof in any manner.

The physical properties of the foams were obtained as follows:

THERMAL CONDUCTIVITY - Measured on an 8"x8"x1" (20.3 cm x 20.3 cm x 2.5 cm) sample cut from a nominal

2 lb/ft³ (32 kg/m³) part density 2'x2'x2"
(60.0 cm x 60.0 cm x 5.1 cm) panel using an Anacon
thermal conductivity measuring device.

DIMENSIONAL STABILITY - Measured as % packing to
non-shrink density defined below.

MINIMUM FILL - Measured on a Brett mold by inserting
less foam reaction components than is necessary to fill
the mold thus resulting in an incomplete part. The
part density of the incomplete part is determined and
is ratioed to the known volume of the mold so as to
ascertain the minimum amount of reaction products
required to fill the mold. The Brett mold is a mold
developed by the refrigeration industry in Europe which
has a cavity measuring 200 cm x 20 cm x 5 cm.

% PACKING TO NON-SHRINK DENSITY - The weight percent of
the difference between the part density and the minimum
fill density is the % packing. The packing level is
varied in order to determine the minimum % packing
which results in no shrinkage of a Brett molded part
when placed in a -20°F (-29°C) environment for 24
hours. The % packing in which no shrinkage is observed
is the % packing to non-shrink density.

EXPANSION AT DEMOLD - Upon unclamping the Brett mold,
the gap or expansion between the two mold halves is
measured at 6 minutes from the time of filling the
mold. The Brett mold is filled to 14% excess of the
minimum fill density.

COMPRESSIVE STRENGTH - determined by ASTM D1691.

DENSITY (PANEL) - determined by dividing the total panel weight by the total panel volume.

DENSITY (CORE) - determined by ASTM D1622.

The following components were employed in the examples and experiments.

POLYOL A is an adduct of a mixture of sucrose and glycerine (64% and 36% weight, respectively) and about 1.5 moles propylene oxide per hydroxyl group contained in the mixture. The resultant polyol has a hydroxyl functionality of 4.6 and a % OH of 13.4 (126.8 OH equiv. wt.).

POLYOL B is a polyoxypropylene glycol having a % OH of 3.3 (515.2 OH equiv. wt.).

POLYOL C is the adduct of propylene oxide and ethylene diamine in quantities so as to provide 1.5 moles of propylene oxide per amine hydrogen atom. The resultant polyol has a functionality of 4 and a % OH of 15.6 (109 OH eq. wt.).

POLYOL D is the reaction product of a mixture of sucrose and triethanol amine in a molar ratio of .44/1 respectively and propylene oxide in an amount of 1.15 moles of propylene oxide per hydroxyl group contained in the mixture. The resultant polyol has an average OH functionality of 4.5 and a % OH of 15.3 (111.1 OH eq. wt.).

POLYOL E is the reaction product of an 80/20 mixture of 2,4,-/2,6-toluene diamine with 1.0 mole of propylene oxide per amine hydrogen atom end capped with 1.0 mole of ethylene oxide per mole of propylene oxide employed. The resultant polyol has an OH functionality of 4 and a % OH of 11.99 (141.8 OH eq. wt.).

POLYOL F is the reaction product of a mixture of sucrose and glycerine in a molar ratio of .3 to 1.0 respectively and 1.2 moles of propylene oxide per OH group contained in the mixture. The resultant polyol has an OH functionality of 4.3 and a % OH of 14.8 (114.9 OH eq. wt.).

POLYOL G is the reaction adduct of propylene oxide and ethylene oxide with ethylene diamine in a molar ratio of 2/2/1 respectively. The resultant polyol has a functionality of 4 and a % OH of 23.99 (70.9 OH eq. wt.).

POLYOL H is the reaction product of an 80/20 mixture of 2,4-/2,6-toluene diamine and 2 moles of ethylene oxide per amine hydrogen atom. The resultant polyol has a functionality of 4 and a % OH of 14.13 (120.3 OH eq. wt.).

POLYOL I is the reaction product of aniline with 2 moles of ethylene oxide per amine hydrogen atom. The resultant polyol has a functionality of 2 and a % OH of 23.97 (131.1 OH eq. wt.).

POLYOL J was a polyoxypropylene glycol having an average equivalent weight of 607 (% OH of 2.8).

ALIPHATIC AMINE A is ethylenediamine having an amine hydrogen equivalent weight of 15.0.

ALIPHATIC AMINE B is diethylenetriamine having an amine hydrogen equivalent weight of 20.6.

ALIPHATIC AMINE C is aminoethylethanolamine having an amine hydrogen equivalent weight of 34.7 and a total active hydrogen equivalent weight of 26.0.

ALIPHATIC AMINE D is triethylenetetramine having an amine hydrogen equivalent weight of 24.3.

ALIPHATIC AMINE E is tetraethylenepentamine having an amine hydrogen equivalent weight of 27.0.

ALIPHATIC AMINE F is an aminated polyoxypropylene glycol having an average amine hydrogen equivalent weight of 100 commercially available from Jefferson Chemical Co. as JEFFAMINE® D-400.

ALIPHATIC AMINE G is an aminated polyoxypropylene glycol having an average amine hydrogen equivalent weight of 500 commercially available from Jefferson Chemical Co. as JEFFAMINE® D-2000.

CELL CONTROL AGENT A is a silicone fluid commercially available from Goldschmidt, A.G. as TEGOSTAB® B-1048.

CATALYST A is a 20/80 mixture by weight of triethylenediamine and N,N-dimethylethanolamine respectively. N,N-dimethylethanolamine has a molecular weight of 89.1.

® Trademark

CATALYST B is a tin mercaptide catalyst commercially available from Witco Chemical Co. as UL-6.

FOAMING AGENT A is trichloromonofluoromethane.

FOAMING AGENT B is water.

POLYISOCYANATE A was prepared by adding to 100 parts by weight of crude undistilled toluenediisocyanate containing between 25 and 30% phosgenation by-products by weight, 4 parts by weight Polyol A and 2 parts by weight dipropylene glycol. The mixture was reacted for 1 hour at 60°C. The resultant urethane modified polyisocyanate had an NCO content of 34.7% by weight and an NCO equivalent weight of 121.

POLYISOCYANATE B was prepared substantially as example 1 of U.S.P. Patent 3,652,424 employing the following changes.

1. The undistilled TDI used as the original reactor charge and subsequently as the diluting isocyanate contained between 85 and 90% volatile TDI and an NCO content of between 43 and 45% by weight.

2. The levels of tetramethyl guanidine and benzoyl chloride were increased to 0.17 and 0.08 parts by weight respectively.

3. The polymerization temperature was maintained at less than 50°C.

4. The diluted product was reacted with 6 parts of Polyol A at 80°C.

5. The resultant urethane modified polyisocyanate was mixed with less than 1% of a silicone fluid commercially available from Union Carbide Corporation as L-5340 to yield a polyisocyanate having an NCO content of 34.6% and an NCO equivalent weight of 122.

POLYISOCYANATE C was prepared by adding 5 parts by weight of Polyol A to 100 parts of crude undistilled toluenediisocyanate containing between 10 and 15 weight percent phosgenation by-products and a percent NCO of between 43 and 45. After reaction, the resultant urethane modified polyisocyanate had a percent NCO of 40.2% and an NCO equivalent weight of 104.

POLYISOCYANATE D was a polymethylene polyphenylisocyanate having an NCO equivalent weight of 134 commercially available from Rubicon Chemical Co. as RUBINATE®M.

Examples 1 through 26 and Comparative Experiments A through I were each conducted according to one of the following foaming procedures.

GENERAL FOAMING PROCEDURE

Foams were processed using either foaming procedure A or foaming procedure B. Two molds were used in these procedures: The Brett mold which was preheated to 125°F (52°C) and was used to determine minimum fill density, dimensional stability and expansion at demold, and a 2'x2'x2"

® Trademark (60.0 cm x 60.0 cm x 5.1 cm) mold which was preheated to 140°F (60°C), and was used to determine the thermal conductivities and compression strengths. The 2'x2'x2" (60.0 cm x 60.0 cm x 5.1 cm) mold was filled with 604 grams of foam in order to attain a nominal 2 lbs/ft³ (32 kg/m³) part density.

Foaming procedure A was followed for all examples and comparative runs except Example 17 by employing a Martin Sweets low pressure machine operating at the following conditions:

    Isocyanate temperature - 80°F (27°C)
    Polyol temperature - 70°F (21°C)
    Isocyanate pressure - 80 psi (552 kP)
    Polyol pressure - 80 psi (552 kP)
    Mixer speed - 5000 revolutions per minute
    Throughput - 30 lbs/min (14 kg/min)

Foaming procedure B was employed for Example 17 by employing an Admiral 900/2HP high pressure machine, which is also referred to as a reaction injection molding (RIM) machine, operating at the following conditions:

    Isocyanate temperature - 90°F (32°C)
    Polyol temperature - 70°F (21°C)
    Isocyanate pressure - 1500 psi (10.34 MP)
    Polyol pressure - 1500 psi (10.34 MP)
    Throughput - 60-70 lbs/min (27-32 kg/min)

The components and results are given in the following table.

The abreviation pbw stands for parts by weight, the abreviation OH eq. stands for the number of hydroxyl equivalents, AMH eq. stands for the number of amine hydrogen equivalents, NCO eq. stands for the number of isocyanate equivalents, NCO/TAH stands for the ratio of the number of isocyanate equivalents and the total number of equivalents of active hydrogen atoms from all sources, and N.D. stands for not determined.

To illustrate the calculation of the percent urea, the calculations for Example 9. are as follows:

% urea =  0.3 pbw Aliphatic Amine B (0.015 eq.) + 1.8 pbw (Polyisocyanate A (0.015 eq.) divided by the sum of 19.7 pwb Polyol E + 0.3 pbw Aliphatic Amine B + 20.83 pbw Polyisocyanate A + 0.1 pbw Foaming Agent B, + 0.3 pbw of 80% of Catalyst A. The fraction is multiplied by 100.

$$\% \text{ urea} = \frac{2.1}{41.23} \times 100 = 5.1\%$$

Compressive strengths of foam samples were measured in X, Y and Z directions. The X direction is parallel to the filling flow of the 2'x2'x2" (60.0 cm x 60.0 cm x 5.1 cm) mold in the 2'x2" (60.0 cm x 5.1 cm) plane. The Y direction is perpendicular to the flow. The Z direction is parallel to the flow in the 2'x2' (60.0 cm x 60.0 cm) plane.

| COMPONENT AND PROPERTY | A | 1 | 2 | 3 |
|---|---|---|---|---|
| Polyol, type/pbw/OH eq. | A/20/0.158 | A/19.7/0.155 | A/17.5/0.138 B/2/0.004 | A/17.6/0.139 B/2/0.004 |
| Aliphatic Amine, type/pbw/AMH eq. | None | B/0.3/0.015 | B/0.5/0.024 | B/0.4/0.019 |
| Polyisocyanate, type/pbw/NCO eq. | A/20.12/0.166 A/9.2/0 | A/20.85/0.172 A/9.2/0 | A/20.02/0.165 A/9.2/0 | A/19.75/0.163 A/9.2/0 |
| Foaming Agent, type/pbw/OH eq. | A/0.62/0.006 | A/0.62/0.006 | A/0.62/0.006 | A/0.62/0.006 |
| Catalyst, type/pbw/OH eq. | B/0.02 | B/0.02 | B/0.02 | B/0.02 |
| Cell Control Agent, type/pbw | A/0.4 | A/0.4 | A/0.4 | A/0.4 |
| % Urea | 0 | 5.1 | 8.4 | 6.7 |
| NCO/TAH ratio | 1.01/1 | 0.98/1 | 0.96/1 | 0.97/1 |
| Cream Time, sec. | 9 | 6 | 2 | 4 |
| Gel Time, sec. | 46 | 48 | 43 | 45 |
| Tack Free Time, sec. | 65 | 62 | 60 | 60 |
| Thermal Conductivity, BTU/(hr.)(ft2)(°F/in.) (W/m"K) | .120 (0.0173) | .112 (0.0162) | .113 (0.0163) | .117 (0.0169) |
| Minimum Fill Density, lbs./ft3 (kg/m$^3$) | 2.07 (33.2) | 2.10 (33.6) | 2.05 (32.8) | 2.05 (32.8) |
| % packing to Non-Shrink Density | 13 | F9.3 | 9.8 | 9.8 |
| Compressive Strength, dir./psi (kP) | X/N.D. Y/26.0(179) Z/18.5(128) | X/N.D. Y/N.D. Z/N.D. | X/N.D. Y/N.D. Z/N.D. | X/N.D. Y/N.D. Z/N.D. |
| Panel Density, lbs./ft3 (kg/m$^3$) | 2.03 (32.5) | 2.02 (32.4) | 2.04 (32.7) | 1.98 (31.7) |
| Core Density, lbs./ft3 (kg/m$^3$) | 1.83 (29.3) | 1.87 (30.0) | N.D. | N.D. |

| COMPONENT AND PROPERTY | B | 4 | 5 | 6 |
|---|---|---|---|---|
| Polyol, type/pbw/OH eq. | A/18/0.142<br>B/2/0.004 | A/19.5/0.154 | A/18.75/0.148 | A/19.55/0.154 |
| Aliphatic Amine, type/pbw/AMH eq. | None | C/0.5/0.014 | C/0.25/0.007<br>G/1/0.002 | B/0.2/0.010<br>C/0.25/0.007 |
| Polyisocyanate, type/pbw/NCO eq. | A/18.63/0.154 | A/21.52/0.178 | A/19.96/0.165 | A/21.42/0.177 |
| Foaming Agent, type/pbw/OH eq. | A/9.2/0 | A/9.2/0 | A/9.2/0 | A/9.2/0 |
| Catalyst, type/pbw/OH eq. | A/0.62/0.006<br>B/0.02 | A/0.62/0.006<br>B/0.02 | A/0.62/0.006<br>B/0.02 | A/0.62/0.006<br>B/0.02 |
| Cell Control Agent, type/pbw | A/0.4 | A/0.4 | A/0.4 | A/0.4 |
| % Urea | 0 | 5.2 | 5.8 | 6.1 |
| NCO/TAH ratio | 1.01/1 | 0.99/1 | 1/1 | 0.99/1 |
| Cream Time, sec. | 8 | N.D. | 6 | 1 |
| Gel Time, sec. | 55 | 37 | 43 | 42 |
| Tack Free Time, sec. | 70 | 55 | 64 | 56 |
| Thermal Conductivity, BTU/(hr.)(ft2)(°F/in.) (W/m"K) | .121<br>(0.0174) | .118<br>(0.0170) | .114<br>(0.0164) | .114<br>(0.0164) |
| Minimum Fill Density, lbs./ft3 (kg/m$^3$) | 2.07 (33.2) | 2.02 (32.4) | 2.01 (32.2) | 2.07 (33.2) |
| % packing to Non-Shrink Density | 13.9 | 15.8 | 10.9 | 6.6 |
| Compressive Strength, dir./psi (kP) | X/N.D.<br>Y/N.D.<br>Z/N.D. | X/N.D.<br>Y/24.1(166)<br>Z/18.3(126) | X/N.D.<br>Y/21.4(148)<br>Z/15.0(103) | X/N.D.<br>Y/15.3(105)<br>Z/10.9(75.2) |
| Panel Density, lbs./ft3 (kg/m$^3$) | 2.00 (32.0) | 2.00 (32.0) | 2.03 (32.5) | 2.00 (32.0) |
| Core Density, lbs./ft3 (kg/m$^3$) | N.D. | 1.83 (29.3) | 1.78 (28.5) | 1.81 (29.0) |

| COMPONENT AND PROPERTY | 7 | C | 8 | D |
|---|---|---|---|---|
| Polyol, type/pbw/OH eq. | A/13.5/0.106 C/6.0/0.055 | D/20/0.180 | D/19.7/0.177 | E/20/0.141 |
| Aliphatic Amine, type/pbw/AMH eq. | C/0.5/0.014 | None | B/0.3/0.015 | None |
| Polyisocyanate, type/pbw/NCO eq. | A/22.63/0.187 | A/24.77/0.205 | A/25.62/0.212 | A/19.74/0.163 |
| Foaming Agent, type/pbw/OH eq. | A/9.2/0 | A/9.2/0 B/0.1/0.011 | A/9.2/0 B/0.1/0.011 | A/9.2/0 B/0.1/0.011 |
| Catalyst, type/pbw/OH eq. | A/0.3/0.003 B/0.02 | A/0.44/0.004 B/0.02 | A/0.44/0.004 B/0.02 | A/0.37/0.003 B/0.02 |
| Cell Control Agent, type/pbw | A/0.4 | A/0.4 | A/0.4 | A/0.4 |
| % Urea | 5.1 | 0 | 4.6 | 0 |
| NCO/TAH ratio | 1.02/1 | 1.05/1 | 1.02/1 | 1.05/1 |
| Cream Time, sec. | 2 | 6 | 4 | 7 |
| Gel Time, sec. | 47 | 38 | 32 | 43 |
| Tack Free Time, sec. | 65 | 50 | 43 | 60 |
| Thermal Conductivity, BTU/(hr.)(ft2)(°F/in.) (W/m"K) | .110 (0.0159) | .113 (0.0163) | .111 (0.0160) | .114 (0.0164) |
| Minimum Fill Density, lbs./ft3 (kg/m$^3$) | 2.12 (34.0) | 1.95 (31.2) | 1.99 (31.9) | 1.87 (30.0) |
| % packing to Non-Shrink Density | 11.4 | 10.6 | N.D. | 15.3 |
| Compressive Strength, dir./psi (kP) | X/N.D. Y/23.3(161) Z/18.6(128) | X/26.13(180) Y/29.0(200) Z/23.5(162) | X/28.56(197) Y/27.69(191) Z/21.25(147) | X/19.25(133) Y/23.38(161) Z/16.81(116) |
| Panel Density,lbs./ft3 (kg/m$^3$) | 2.04 (32.7) | 2.11 (33.8) | 2.03 (32.5) | 2.05 (32.8) |
| Core Density, lbs./ft3 (kg/m$^3$) | 1.84 (29.5) | 1.85 (29.6) | 1.83 (29.3) | 1.75 (28.0) |

| COMPONENT AND PROPERTY | 9 | E | 10 | F |
|---|---|---|---|---|
| Polyol, type/pbw/OH eq. | E/19.7/0.139 | E/12/0.085 F/8/0.070 | E/11.8/0.083 F/7.9/0.069 | A/12/0.095 H/8/0.067 |
| Aliphatic Amine, type/pbw/AMH eq. | B/0.3/0.015 | None | B/0.3/0.015 | None |
| Polyisocyanate, type/pbw/NCO eq. | A/20.83/0.172 | A/22.12/0.183 | A/23.31/0.193 | A/20.7/0.171 |
| Foaming Agent, type/pbw/OH eq. | A/9.2/0 B/0.1/0.011 | A/9.2/0 B/0.1/0.011 | A/9.2/0 B/0.1/0.011 | A/9.2/0 |
| Catalyst, type/pbw/OH eq. | A/0.37/0.003 B/0.02 | A/0.37/0.003 B/0.02 | A/0.37/0.003 B/0.02 | A/0.37/0.003 B/0.02 |
| Cell Control Agent, type/pbw | A/0.4 | A/0.4 | A/0.4 | A/0.4 |
| % Urea | 5.1 | 0 | 4.87 | 0 |
| NCO/TAH ratio | 1.02/1 | 1.08/1 | 1.04/1 | 1.04/1 |
| Cream Time, sec. | 3 | 7 | 5 | 8 |
| Gel Time, sec. | 35 | 43 | 40 | 32 |
| Tack Free Time, sec. | 48 | 63 | 52 | 45 |
| Thermal Conductivity, BTU/(hr.)(ft2)($^\circ$F/in.) (W/m"K) | .114 (0.0164) | .117 (0.0169) | .115 (0.0166) | .113 (0.0163) |
| Minimum Fill Density, lbs./ft3 (kg/m$^3$) | 1.87 (30.0) | 1.90 (30.4) | 1.94 (31.1) | 2.08 (33.3) |
| % packing to Non-Shrink Density | 8.2 | 9.4 | 10.1 | 10.4 |
| Compressive Strength, dir./psi (kP) | X/23.13(159) Y/30.56(211) Z/17.88(123) | X/23.19(160) Y/32.8(226) Z/19.75(136) | X/26.13(180) Y/35.63(246) Z/20.19(139) | X/19.44(134) Y/22.00(152) Z/18.75(129) |
| Panel Density, lbs./ft3 (kg/m$^3$) | 2.05 (32.8) | 2.03 (32.5) | 2.02 (32.4) | 1.94 (31.1) |
| Core Density, lbs./ft3 (kg/m$^3$) | 1.81 (29.0) | 1.78 (28.5) | 1.78 (28.5) | 1.79 (28.7) |

## EXAMPLE AND COMPARATIVE EXPERIMENT NO.

| COMPONENT AND PROPERTY | 11 | 12 | 13 | 14 |
|---|---|---|---|---|
| Polyol, type/pbw/OH eq. | A/11.8/0.093<br>H/7.9/0.066 | A/19.5/0.154 | A/19.5/0.154 | A/19.5/0.154 |
| Aliphatic Amine, type/pbw/AMH eq. | B/0.3/0.015 | D/0.5/0.021 | E/0.5/0.019 | D/0.5/0.021 |
| Polyisocyanate, type/pbw/NCO eq. | A/21.59/0.178 | A/21.2/0.175 | A/21.13/0.175 | A/22.62/0.187 |
| Foaming Agent, type/pbw/OH eq. | A/9.2/0 | A/9.2/0 | A/9.2/0 | A/9.2/0<br>B/0.1/0.011 |
| Catalyst, type/pbw/OH eq. | A/0.3/0.003<br>B/0.02 | A/0.6/0.005<br>B/0.02 | A/0.6/0.005<br>B/0.02 | A/0.6/0.005<br>B/0.02 |
| Cell Control Agent, type/pbw | A/0.4 | A/0.4 | A/0.4 | A/0.4 |
| % Urea | 5.0 | 7.2 | 6.7 | 6.9 |
| NCO/TAH ratio | 1.01/1 | 0.97/1 | 0.98/1 | 0.98/1 |
| Cream Time, sec. | 5 | 3-4 | 1 | 1 |
| Gel Time, sec. | 30 | 42 | 47 | 41 |
| Tack Free Time, sec. | 39 | 54 | 60 | 55 |
| Thermal Conductivity, BTU/(hr.)(ft2)(°F/in.) (W/m"K) | .110<br>(0.0159) | .108<br>(0.0156) | .117<br>(0.0169) | .117<br>(0.0169) |
| Minimum Fill Density, lbs./ft3 (kg/m³) | 2.06 (33.0) | 2.09 (33.5) | 2.08 (33.3) | 1.92 (30.8) |
| % packing to Non-Shrink Density | 8.9 | 7.1 | 9.6 | N.D. |
| Compressive Strength, dir./psi (kP) | X/20.69(143)<br>Y/22.94(158)<br>Z/19.19(132) | X/17.94(124)<br>Y/37.56(259)<br>Z/9.75(67.2) | X/22.63(156)<br>Y/25.88(178)<br>Z/20.38(141)<br>2.04 (32.7) | X/24.69(170)<br>Y/27.75(191)<br>Z/20.31(140)<br>N.D. |
| Panel Density, lbs./ft3 (kg/m³) | 2.01 (32.2) | N.D. | | N.D. |
| Core Density, lbs./ft3 (kg/m³) | 1.81 (29.0) | 1.78 (28.5) | 1.76 (28.2) | |

EXAMPLE AND COMPARATIVE EXPERIMENT NO.

| COMPONENT AND PROPERTY | 15 | 16 | 17 | G |
|---|---|---|---|---|
| Polyol, type/pbw/OH eq. | A/18/0.142 | A/18/0.142 | A/19.7/0.155 | A/20/0.158 |
| Aliphatic Amine, type/pbw/AMH eq. | F/2/0.020 | G/2/0.004 | B/0.3/0.015 | None |
| Polyisocyanate, type/pbw/NCO eq. | A/19.41/0.160 | A/18.38/0.152 | A/20.85/0.172 | A/19.53/.161 |
| Foaming Agent, type/pbw/OH eq. | A/9.2/0 | A/9.2/0 | A/9.2/0 | A/9.2/0 |
| Catalyst, type/pbw/OH eq. | A/0.62/0.006 B/0.02 | A/0.62/0.006 B/0.02 | A/0.62/0.006 B/0.02 | A/0.62/.006 B/0.02 |
| Cell Control Agent, type/pbw | A/0.4 | A/0.4 | A/0.4 | A/0.4 |
| % Urea | 11.0 | 6.4 | 5.1 | 0 |
| NCO/TAH ratio | 0.95/1 | 1/1 | 0.98/1 | 0.98/1 |
| Cream Time, sec. | 1 | N.D. | 4 | 12 |
| Gel Time, sec. | 39 | N.D. | 43 | 48 |
| Tack Free Time, sec. | 61 | N.D. | 58 | 62 |
| Thermal Conductivity, BTU/(hr.)(ft2)(°F/in.) (W/m"K) | .115 (0.0166) | .120 (0.0173) | .111 (0.0160) | 0.116 (0.0167) |
| Minimum Fill Density, lbs./ft3 (kg/m$^3$) | 2.01 (32.2) | 2.02 (32.4) | 1.93 (30.9) | 2.095 (33.6) |
| % packing to Non-Shrink Density | 10.3 | 12.1 | 8.7 | 14.4 |
| Compressive Strength, dir./psi (kP) | N.D. -- | N.D. -- | N.D. -- | N.D. -- |
| Expansion at demold after 6 min. with 14% packing, mm | N.D. | N.D. | N.D. | 3.9 |
| Panel Density, lbs./ft3 (kg/m$^3$) | 1.98 (31.7) | 1.97 (31.6) | 2.00 (32.0) | 2.04 (32.7) |
| Core Density, lbs./ft3 (kg/m$^3$) | 1.98 (31.7) | 1.74 (27.9) | 1.83 (29.3) | 1.84 (29.5) |

29,241A-F

-21-

0061201

| COMPONENT AND PROPERTY | 18 | 19 | 20 | 21 |
|---|---|---|---|---|
| Polyol, type/pbw/OH eq. | A/19.6/0.155 | A/19.3/0.152 | A/18.5/0.146 | A/17.8/0.140 |
| Aliphatic Amine, type/pbw/AMH eq. | B/0.1/0.005 | B/0.2/0.010 | B/0.4/0.019 | B/0.6/0.029 |
| Polyisocyanate, type/pbw/NCO eq. | A/19.53/0.161 | A/19.53/0.161 | A/19.53/0.161 | A/19.53/0.161 |
| Foaming Agent, type/pbw/OH eq. | A/9.06/0 | A/8.97/0 | A/8.71/0 | A/8.46/0 |
| Catalyst, type/pbw/OH eq. | A/0.611/0.005 B/0.0197 | A/0.605/0.005 B/0.0195 | A/0.59/0.005 B/0.0189 | A/0.57/0.005 B/0.018 |
| Cell Control Agent, type/pbw | A/0.39 | A/0.38 | A/0.38 | A/0.37 |
| % Urea | 1.8 | 3.5 | 6.9 | 10.7 |
| NCO/TAH ratio | 0.98/1 | 0.96/1 | 0.95/1 | 0.93/1 |
| Cream Time, sec. | 10 | 8 | 4 | 0 |
| Gel Time, sec. | 48 | 45 | 41 | 34 |
| Tack Free Time, sec. | 65 | 60 | 55 | 45 |
| Thermal Conductivity, BTU/(hr.)(ft2)(°F/in.) (W/m"K) | 0.113 (0.0163) | 0.112 (0.0162) | 0.111 (0.0160) | 0.114 (0.0164) |
| Minimum Fill Density, lbs./ft3 (kg/m³) | 2.09 (33.5) | 2.11 (33.8) | 2.05 (32.8) | 2.11 (33.8) |
| % packing to Non-Shrink Density | 7.7 | F8.9 | 7.4 | 6.1 |
| Compressive Strength, dir./psi (kP) | N.D. | N.D. | N.D. | N.D. |
| Expansion at demold after 6 min. with 14% packing, mm | 2.9 | 2.5 | 2.4 | 2.1 |
| Panel Density, lbs./ft3 (kg/m³) | 2.01 (32.2) | 2.05 (32.8) | 2.06 (33.0) | 2.02 (32.4) |
| Core Density, lbs./ft3 (kg/m³) | 1.87 (30.0) | 1.91 (30.6) | 1.88 (30.1) | 1.83 (29.3) |

29,241A-F

## EXAMPLE AND COMPARATIVE EXPERIMENT NO.

| COMPONENT AND PROPERTY | H | 22 | 23 | 24 |
|---|---|---|---|---|
| Polyol, type/pbw/OH eq. | F/90/0.783, J/10/0.016 | F/90/0.783, J/10/0.016 | F/90/0.783, J/10/0.016 | F/90/0.783, J/10/0.016 |
| Aliphatic Amine, type/pbw/AMH eq. | None | B/1.0/0.049 | B/1.5/0.073 | B/2.0/0.097 |
| Polyisocyanate, type/pbw/NCO eq. | B/117.4/0.962 | B/121.1/0.993 | B/123.1/1.009 | B/125.1/1.025 |
| Foaming Agent, type/pbw/OH eq. | A/46.0; B/1.25/0.139 | A/46.0; B/1.25/0.139 | A/46.0; B/1.25/0.139 | A/46.0; B/1.25/0.139 |
| Catalyst, type/pbw/OH eq. | A/2.75/0.025; B/0.1 | A/2.75/0.025; B/0.1 | A/2.75/0.025; B/0.1 | A/2.75/0.025; B/0.1 |
| Cell Control Agent, type/pbw | A/1.25 | A/1.25 | A/1.25 | A/1.25 |
| % Urea | None | 3.1 | 4.6 | 6.0 |
| NCO/TAH ratio | 1/1 | 0.98/1 | 0.97/1 | 0.97/1 |
| Cream Time, sec. | 9 | 6 | 4 | 1 |
| Gel Time, sec. | 52 | 44 | 39 | 30 |
| Tack Free Time, sec. | 64 | 58 | 53 | 42 |
| Thermal Conductivity, BTU/(hr.)(ft2)(°F/in.) (W/m"K) | 0.127 (0.0183) | 0.124 (0.0179) | 0.122 (0.0176) | 0.122 (0.0176) |
| Minimum Fill Density, lbs./ft3 (kg/m³) | 1.74 (27.9) | 1.76 (28.2) | 1.78 (28.5) | 1.81 (29.0) |
| % packing to Non-Shrink Density | 14.9 | 11.9 | 11.2 | 8.8 |
| Compressive Strength, dir./psi (kP) | X/19.9(137) Y/26.9(185) Z/19.1(132) | X/18.4(127) Y/26.6(183) Z/18.1(125) | X/18.8(130) Y/29.7(205) Z/17.9(123) | X/14.6(101) Y/21.6(149) Z/14.3(99) |
| Panel Density, lbs./ft3 (kg/m³) | 2.00 (32.0) | 2.02 (32.4) | 2.01 (32.2) | 1.86 (29.8) |
| Core Density, lbs./ft3 (kg/m³) | 1.88 (30.1) | 1.85 (29.6) | 1.76 (28.2) | 1.66 (26.6) |

29,241A-F

EXAMPLE AND COMPARATIVE EXPERIMENT NO.

| COMPONENT AND PROPERTY | 25 | I | 26 |
|---|---|---|---|
| Polyol, type/pbw/OH eq. | F/90/0.783 B/10/0.019 | A/100/0.789 | A/100/0.789 |
| Aliphatic Amine, type/pbw/AMH eq. | B/2.0/0.097 | None | B/1.5/0.073 |
| Polyisocyanate, type/pbw/NCO eq. | C/113.1/1.088 | D/129.85/0.969 | D/136.3/1.017 |
| Foaming Agent, type/pbw/OH eq. | A/40 | A/46.0 B/1.0/0.111 | A/46.0 B/1.0/0.111 |
| Catalyst, type/pbw/OH eq. | A/2.5/0.022 B/0.1 | A/3.0/0.027 B/0.1 | A/3.0/0.027 B/0.1 |
| Cell Control Agent, type/pbw | A/2.0 | A/2.0 | A/2.0 |
| % Urea | 5.6 | None | 4.7 |
| NCO/TAH ratio | 1.18/1 | 1.05/1 | 1.02/1 |
| Cream Time, sec. | N.D. | 8 | 4 |
| Gel Time, sec. | N.D. | 46 | 35 |
| Tack Free Time, sec. | N.D. | 58 | 47 |
| Thermal Conductivity, BTU/(hr.)(ft2)($^\circ$F/in.) (W/m"K) | 0.128 (0.0185) | 0.124 (0.0179) | 0.121 (0.0174) |
| Minimum Fill Density, lbs./ft3 (kg/m$^3$) | 1.57 (25.1) | 1.99 (31.9) | 2.02 (32.4) |
| % packing to Non-Shrink Density | 18.6 | 18.6 | 14.4 |
| Compressive Strength, dir./psi (kP) | X/15.5(107) Y/21.9(151) Z/13.6(94) | X/10.7(75) Y/29.2(201) Z/14.7(101) | X/11.9(82) Y/28.8(199) Z/13.0(90) |
| Panel Density, lbs./ft3 (kg/m$^3$) | 1.81 (29.0) | 1.99 (31.9) | 2.03 (32.5) |
| Core Density, lbs./ft3 (kg/m$^3$) | 1.68 (26.9) | 1.81 (29.0) | 1.86 (29.8) |

## Claims

1. A process for preparing a rigid polyurethane foam by reacting a polyol or a mixture of polyols suitable for use in preparing rigid polyurethane foams with a polyisocyanate or polyisothiocyanate in the presence of at least one foaming agent and at least one catalyst characterized by incorporating into the reaction mixture at least one compound having at least one aliphatic primary amine group, the aliphatic primary amine-containing compound being present in an amount such that the theoretical percent urea as calculated by the method described herein is from 1 to 30 weight percent based on the total weight of the reactive ingredients.

2. The process of Claim 1 characterized in that the aliphatic primary amine-containing compound is ethylenediamine, diethylenetriamine, aminoethylethanolamine, triethylenetetramine, tetraethylenepentamine, aminated polyglycols or mixtures thereof.

3. A rigid foam resulting from the process of Claim 1 or 2.

4. A mixture of active hydrogen-containing materials for use in Claim 1 or 2 which comprises a polyol or mixture of polyols having an average hydroxyl functionality of from 2 to 8 and an average hydroxyl equivalent weight of from 50 to 250; and at least one compound having at least one aliphatic primary amine group, the polyol(s) and aliphatic primary amine-containing compound(s) being present in such proportions that when combined with a polyisocyanate and/or polyisothiocyanate, at least one foaming agent and at least one catalyst, the calculated theoretical urea content of the resultant foam is from 1 to 30 weight percent based on the total weight of the reactive ingredients.

5. The mixture of Claim 4 characterized in that the aliphatic primary amine-containing compound is ethylenediamine, diethylenetriamine, aminoethylethanolamine, triethylenetetramine, tetraethylenepentamine or aminated polyglycols or mixtures thereof.

| Category | Citation of document with indication, where appropriate, of relevant passages | Relevant to claim | CLASSIFICATION OF THE APPLICATION (Int. Cl. 3) |
|---|---|---|---|
| | **DOCUMENTS CONSIDERED TO BE RELEVANT** | | |
| Y | GB – A – 1 517 720 (WITCO) <br> * Claims * <br><br> -- | 1,3,4 | C 08 G 18/66 <br> C 08 G 18/14 <br> C 08 G 18/32 <br> C 08 G 18/65 <br> C 08 L 71/02 |
| Y | GB – A – 754 502 (BAYER) <br> * Claims; page 1, lines 52-57 * <br><br> -- | 1,3 | |
| Y | US – A – 3 734 894 (FINELLI et al.) <br> * Claim; column 2, lines 53-57 * <br><br> ---- | 1,2 | |
| | | | **TECHNICAL FIELDS SEARCHED (Int.Cl. 3)** <br><br> C 08 G 18/00 <br> C 08 L 71/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| X | The present search report has been drawn up for all claims | |
| Place of search <br> VIENNA | Date of completion of the search <br> 08-06-1982 | Examiner <br> WEIGERSTORFER |

EPO Form 1503.1 06.78